# EUROPEAN PATENT APPLICATION

(11) **EP 3 799 721 A1**
(43) Date of publication of application: **07.04.2021**
(21) Application number: 19306262.7
(22) Date of filing: 02.10.2019
(51) Int. Cl.: A23B 4/24, A23J 1/00, A23J 3/04, A23K 10/26

(54) **METHODS OF TREATING ANIMAL PROTEINS**

(71) Applicant: Mars Incorporated, Mclean, VA 22101-3883 (US)
(72) Inventor: The designation of the inventor has not yet been filed
(74) Representative: Nony

(57) **Abstract**

The presently disclosed subject matter provides methods of treating animal proteins and pet food products including the same. Methods include treating animal proteins with one or more base compounds to increase the pH thereof to provide for increased preservation and the reduction of spoilage of the animal protein.

## Description

### 1. FIELD

The presently disclosed subject matter relates to animal proteins and processes for treating the same. Specifically, animal proteins of the present disclosure can be treated with one or more base components in order to advantageously increase preservation and reduce deterioration of the animal protein. The animal proteins treated in accordance with the present disclosure can be used in combination with other components to form, for example, a pet food product.

### 2. BACKGROUND

Pet food products provide a widespread means for feeding pets. With respect to manufactured pet food products, there has been heightened demand to incorporate natural ingredients with increased freshness and quality while also providing the convenience of prolonged shelf life. Freshness and reduced fermentation of raw ingredients, such as meats and viscera, have been achieved in various ways, for example, by reducing the temperature of the components in order to freeze or chill them. Other known methods include acidifying or decreasing the pH of the raw materials. For example, commercial products which decrease pH in order to reduce or prevent the growth of bacteria and preserve the raw materials are readily available. Improving both the quality and freshness of dry and wet animal proteins used in such pet food products results in improved product performance with pets due to increased palatability.

Accordingly, there has been ongoing consumer demand for manufactured pet food products including raw ingredients having both a high level of freshness and quality and for methods to produce the same. A need has continually existed for ingredients that maintain integrity during processing, and which can enhance the palatability of pet food products. The presently disclosed subject matter addresses these and other needs.

### 3. SUMMARY

The presently disclosed subject matter provides for processes for treating animal proteins. Such treated proteins can be used in combination with other components to form pet food products. It was surprisingly and advantageously found that increasing the pH of animal proteins using a base component resulted in reduced fermentation as well as increased freshness and quality of such raw materials. By increasing the pH of the raw materials in accordance with the present disclosure, spoilage and fermentation of the same can be favorably reduced or prevented. Further, the quality of pet food can be increased by obtaining fresher raw material due to such treated animal proteins, for example, as indicated by levels of biogenic amines. This increase in quality can impact palatability and additionally advantageously impact any side effects caused by biogenic amines.

The present disclosure provides for methods of treating one or more protein sources. The method can include adding one or more base components to the one or more protein sources. The treated protein sources can have a histamine level of less than about 300 ppm. In particular non-limiting embodiments, the treated protein sources can have a histamine level of from about 10 ppm to about 200 ppm. According to one of its aspects, the present invention relates to a method of treating one or more protein sources, the method comprising adding one or more base components to the protein source, wherein the treated protein sources have a histamine level of less than about 300 ppm.

In certain non-limiting embodiments, the base component can include sodium hydroxide (NaOH). In certain non-limiting embodiments, the sodium hydroxide can be present in an amount of from about 0.25 wt% to about 0.5 wt%.

In certain non-limiting embodiments, the one or more protein sources can include animal protein, animal-derived protein, or combinations thereof. In particular non-limiting embodiments, the one or more protein sources can include viscera.

In certain non-limiting embodiments, the treated animal proteins can have a pH of from about 5 to about 8. In particular non-limiting embodiments, the treated animal proteins can have a pH of from about 6 to about 7.

The foregoing has outlined broadly the features and technical advantages of the present application in order that the detailed description that follows may be better understood. Additional features and advantages of the application will be described hereinafter which form the subject of the claims of the application. It should be appreciated by those skilled in the art that the conception and specific embodiment disclosed may be readily utilized as a basis for modifying or designing other structures for carrying out the same purposes of the present application. It should also be realized by those skilled in the art that such equivalent constructions do not depart from the spirit and scope of the application as set forth in the appended claims. The novel features which are believed to be characteristic of the application, both as to its organization and method of operation, together with further objects and advantages will be better understood from the following description.

### 4. BRIEF DESCRIPTION OF THE DRAWINGS

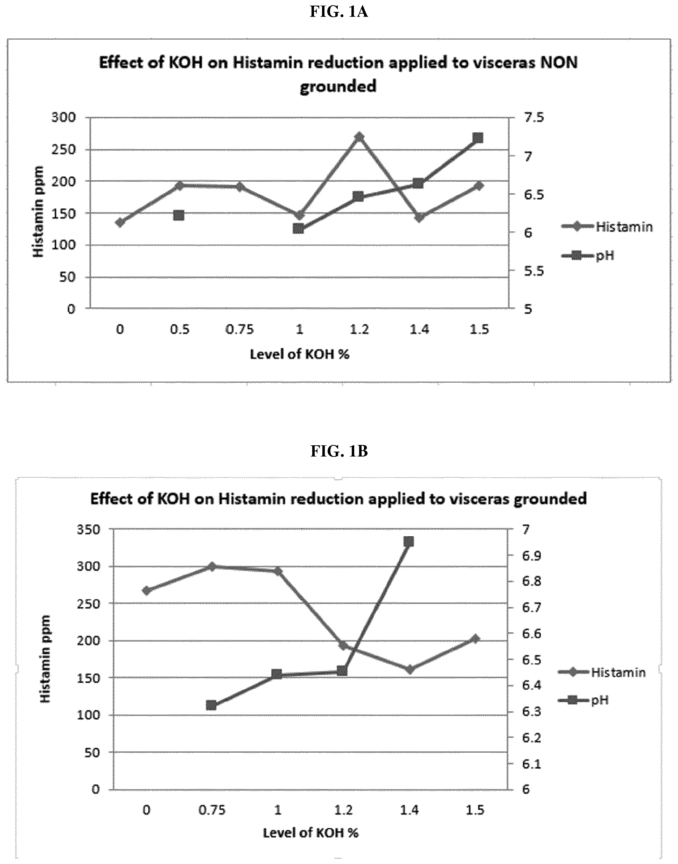

FIG. 1A depicts a graph illustrating the results of preservation testing by treating unground viscera with potassium hydroxide (KOH) as a base component at varying final concentrations in accordance with Example 1 and with certain non-limiting embodiments. Abscissa: level of KOH, as expressed in wt%. Ordinate: amount of histamine, as expressed in ppm. The amount of histamine (in ppm) is represented by the curve with the diamond shape. The pH value is represented by the curve with the square shape;
FIG. 1B depicts a graph illustrating the results of preservation testing by treating ground viscera with potassium hydroxide (KOH) as a base component at varying final concentrations in accordance with Example 1 and in with certain non-limiting embodiments. Abscissa: level of KOH, as expressed in wt%. Ordinate: amount of histamine, as expressed in ppm The amount of histamine (in ppm) is represented by the curve with the diamond shape. The pH value is represented by the curve with the square shape;

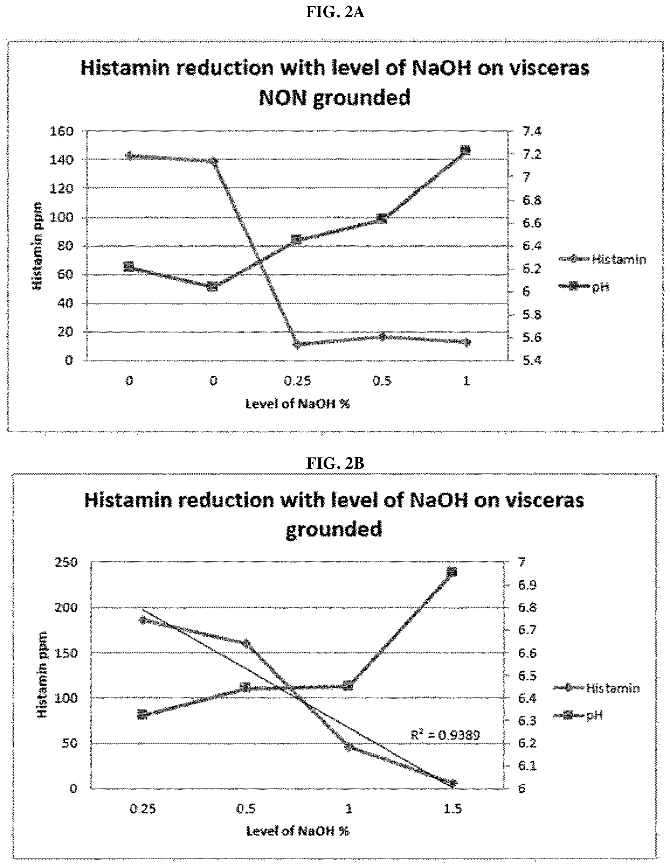

FIG. 2A depicts a graph illustrating the results of preservation testing by treating unground viscera with sodium hydroxide (NaOH) as a base component at varying final concentrations in accordance with Example 1 and certain non-limiting embodiments. Abscissa: level of KOH, as expressed in wt%. Ordinate: amount of histamine, as expressed in ppm. The amount of histamine (in ppm) is represented by the curve with the diamond shape. The pH value is represented by the curve with the square shape;
FIG. 2B depicts a graph illustrating the results of preservation testing by treating ground viscera with sodium hydroxide (NaOH) as a base component at varying final concentrations in accordance with Example 1 and certain non-limiting embodiments. Abscissa: level of KOH, as expressed in wt%. Ordinate: amount of histamine, as expressed in ppm The amount of histamine (in ppm) is represented by the curve with the diamond shape. The pH value is represented by the curve with the square shape;

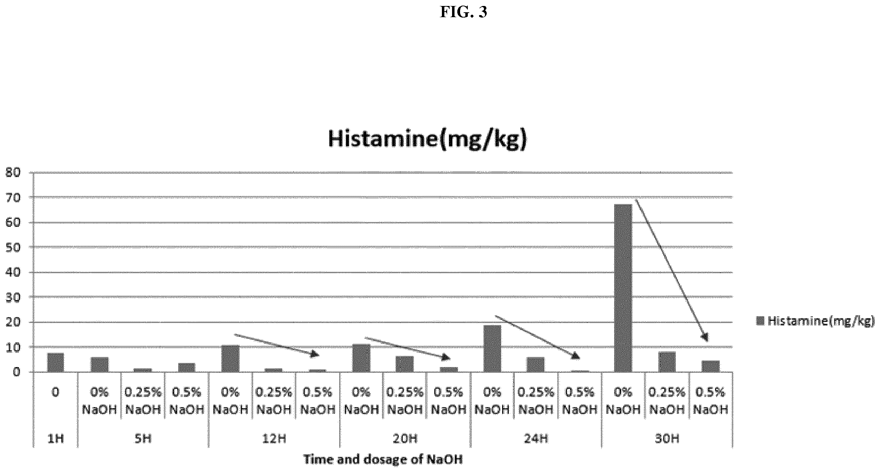

FIG. 3 depicts a graph illustrating the results of preservation testing by treating poultry meal including viscera with sodium hydroxide (NaOH) as a base component at varying final concentrations and at various times in accordance with Example 2 and certain non-limiting embodiments. Each bar on the abscissa of the graph illustrates the amount of histamine (in mg/kg) for each of the mentioned conditions. Ordinate: amount of histamine in mg/kg; and

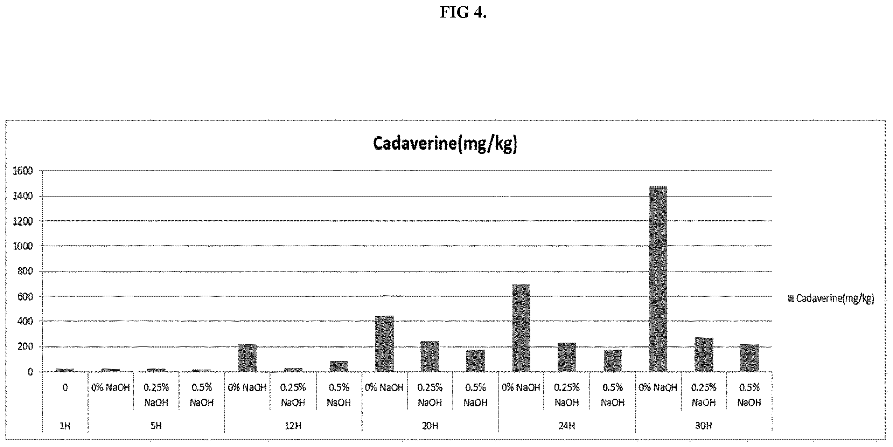

FIG. 4 depicts a graph illustrating the results of preservation testing by treating poultry meal including viscera with sodium hydroxide (NaOH) as a base component at varying final concentrations and at various times in accordance with Example 2 and certain non-limiting embodiments. Each bar on the abscissa of the graph illustrates the amount of cadaverine (in mg/kg) for each of the mentioned conditions. Ordinate: amount of cadaverine, as expressed in mg/kg.

### 5. DETAILED DESCRIPTION

The presently disclosed subject matter relates to animal proteins and processes for treating the same. Specifically, animal proteins of the present disclosure can be treated with one or more base components. It was surprisingly and advantageously found that increasing the pH of animal proteins resulted in reduced or prevention of deterioration of the material. The animal proteins treated in accordance with the present disclosure can be used in combination with other components to form, for example, a pet food product. These and other aspects of the disclosed subject matter are discussed in further detail below.

For clarity and not by way of limitation, this detailed description is divided into the following sub-portions:
5.1. Definitions;
5.2. Animal protein sources;
5.3. Pet food compositions;
5.4. Methods of making pet food compositions; and
5.5. Applications.

### 5.1. Definitions

The terms used in this specification generally have their ordinary meanings in the art, within the context of this subject matter and in the specific context where each term is used. Certain terms are defined below to provide additional guidance in describing the compositions and methods of the disclosed subject matter and how to make and use them.

As used in the specification and the appended claims, the singular forms "a," "an," and "the" include plural referents unless the context clearly dictates otherwise. Thus, for example, reference to "a compound" includes mixtures of compounds.

The term "about" or "approximately" means within an acceptable error range for the particular value as determined by one of ordinary skill in the art, which will depend in part on how the value is measured or determined, *i.e.,* the limitations of the measurement system. For example, "about" can mean within three or more than three standard deviations, per the practice in the art. Alternatively, "about" can mean a range of up to 20%, preferably up to 10%, more preferably up to 5%, and more preferably still up to 1% of a given value. Also, particularly with respect to systems or processes, the term can mean within an order of magnitude, preferably within five-fold, and more preferably within two-fold, of a value.

As used herein, the terms "animal" or "pet" refers to animals including, but not limited to, dogs, cats, and the like. Domestic dogs and cats are particular non-limiting examples of animals or pets.

As used herein, the term "animal protein" refers to animal-based sources of protein. Such animal protein includes, for example without limitation, meat (for example, pork, beef, or veal), poultry (for example, chicken), fish, organs (for example, liver, spleen, or heart), viscera (for example, viscera of chicken or pork), and combinations thereof.

As used herein, the terms "comprises," "comprising," or any other variation thereof, are intended to cover a non-exclusive inclusion, such that a process, method, article, or apparatus that comprises a list of elements does not include only those elements but can include other elements not expressly listed or inherent to such process, method, article, or apparatus.

As used herein, the term "nutritionally complete" refers to pet food products that contain all known required nutrients for the intended recipient of the pet food product, in all appropriate amounts and proportions based, for example, on recommendations of recognized and competent authorities in the field of animal nutrition. Such foods are therefore capable of serving as a source of dietary intake to maintain life, without the addition of supplemental nutritional sources. The term "nutritionally balanced", as used herein, refers to pet food products that can be nutritionally complete. Alternatively, "nutritionally balanced", as used herein, can refer to pet food products that are not nutritionally complete.

As used herein, the terms "palatability" or "palatable" refer to being desirable to the palate or taste. Further, the terms "palatability" or "palatable" as used herein refer to the extent to which a pet food product appeals to the palate or taste of an animal. This is suitable measured by feeding tests, e.g., difference tests or ranking tests. In certain embodiments, "palatability" can mean a relative preference for one food product over another. For example, when an animal shows a preference for one of two or more food products, the preferred food product is more "palatable", and has "enhanced palatability" or "increased palatability". In certain embodiments, the relative palatability of one food product compared to one or more other food products can be determined, for example, in side-by-side, free-choice comparisons, e.g., by relative consumption of the food products, or other appropriate measures of preference indicative of palatability.

As used interchangeably herein, the terms "pet food" or "pet food composition" refer to a composition intended for ingestion by an animal or pet. Pet foods can include, without limitation, nutritionally balanced compositions suitable for daily feed as well as treats, which can be nutritionally balanced.

As used herein, the term "protein source" refers to the source of animal protein, animal-derived protein, or combinations thereof.

As used herein, the term "viscera" refers to intestines of the body. Viscera can additionally include other internal organs of the body, for example, the heart, stomach or lungs in natural proportions.

As used herein, the term "weight percent" is meant to refer to the quantity by weight of a constituent or component, for example, in the pet food composition as a percentage of the overall weight of the pet food composition. The term "weight percent" can also refer to the quantity by weight of a constituent or component, for example, in the hydrolysate composition as a percentage of the overall weight of the hydrolysate composition. The terms "weight percent," "wt-%," "wt.%", and "wt%" are used interchangeably.

### 5.2. Methods of Treating Animal Proteins

In certain non-limiting embodiments, animal proteins of the present disclosure can be treated according to processes disclosed herein. In particular embodiments, the pH of the animal proteins can be increased by one or more base components. Such treatment surprisingly and advantageously provided for reduced deterioration and increased preservation characteristics of the animal proteins.

### Animal Protein Sources

In certain non-limiting embodiments, the one or more protein sources can include animal protein, animal-derived protein or combinations thereof. The one or more protein sources can include animal protein sources such as chicken or pork. The one or more protein sources can include, for example, trachea, kidney, liver, or viscera. When used herein, the term "protein" refers to one or more proteins suitably provided by one or more of the raw materials. The protein may suitably be animal proteins, animal-derived proteins or any combination thereof. Animal proteins include any protein of animal origin (including vertebrate and invertebrate proteins), e.g., proteins derived from mammals, fowl, fish and insects. Examples of suitable animal proteins include those derived from chicken, turkey, beef, lamb, pork, venison, buffalo, duck, kangaroo, shell fish, crustaceans, salmon, tuna, whitefish, etc. They may suitably be derived from muscle meat, organs, tendons, bone, etc. The proteins may be in any suitable form, e.g., isolated or partially isolated; concentrated; ground, etc. For example, and not by way of limitation, the one or more protein sources can include one or more of pork trachea, pork kidney, poultry parts, chicken liver, chicken viscera, chicken necks, organs, turkey carcasses, or combinations thereof. In particular non-limiting embodiments, the one or more protein sources can include, for example, liver of chicken, turkey, pork, beef, lamb or fish. A person of skill in the art will appreciate a wide variety of protein sources are suitable for use with the present disclosure.

In certain non-limiting embodiments, the one or more protein sources can include animal viscera, for example, viscera of poultry. Such raw materials can be prone to fermentation and deterioration. Further, the state of the material can have an effect on the rate and occurrence of fermentation and deterioration. For example, ground viscera can be more prone to fermentation and deterioration as compared to native or unground viscera, for example, as enzymes in a ground viscera can be mixed with bacteria and the substrate.

In certain non-limiting embodiments, the initial pH of the one or more protein sources can be from about 5 to about 7, from about 5 to about 6.5, or from about 5 to 6. In particular non-limiting embodiments, the initial pH of the one or more protein sources can be about 5, about 5.5, about 6, or about 6.5. A person of ordinary skill in the art will appreciate an initial pH of the one or more protein sources can vary, for example, depending on the raw material and its state (e.g., ground or unground).

In certain non-limiting embodiments, the one or more protein sources can be cooled or chilled prior to treatment. In certain non-limiting embodiments, water can be at least partially removed from the one or more protein sources. In certain non-limiting embodiments, the one or more animal proteins can be mixed together.

### Base Components

In certain non-limiting embodiments, the one or more protein sources can be treated with one or more base components. The one or more base components can be used to increase the pH of the one or more protein sources. The one or more base components can include any suitable base compound. A person skilled in the art will appreciate that a wide variety of base components are suitable for use with the present disclosure. In certain embodiments, the one or more base components can include sodium hydroxide (NaOH) or potassium hydroxide (KOH).

In certain non-limiting embodiments, the one or more base components can be added to the one or more protein sources at a final concentration of from about 0.1 wt% to about 5 wt%, about 0.5 wt% to about 2 wt%, or from about 0.5 wt% to about 1.5 wt%. In particular non-limiting embodiments, the one or more base components can be added to the one or more protein sources at a final concentration of about 0.1% wt, about 0.25 wt%, about 0.5 wt%, about 0.75 wt%, about 1 wt%, about 1.2 wt%, about 1.4 wt%, about 1.5 wt%, or about 2 wt%.

In certain non-limiting embodiments, the pH of the one or more protein sources after treatment can be in a range of from about 5.1 to about 8, from about 6 to about 7.8, from about 6.5 to about 7.5, or from about 6 to about 7. In particular non-limiting embodiments, the pH of the one or more protein sources after treatment can be about 6, about 6.5, about 7, about 7.2, about 7.5, or about 7.8.

The one or more base components can be applied to the one or more protein sources homogenously. For example, in certain non-limiting embodiments, the one or more base components can be sprayed onto the one or more protein sources.

### Features of Treated Protein Sources

Protein sources treated in accordance with the present disclosure surprisingly and advantageously provide for reduced or prevented deterioration of the material. By increasing the pH of the raw materials in accordance with the present disclosure, spoilage and fermentation of the same can be favorably reduced or prevented. Further, the quality of pet food can be increased by obtaining fresher raw material by increasing the pH in accordance with methods of the present disclosure. Such quality can impact palatability and additionally advantageously impact any side effects caused by biogenic amines.

In certain non-limiting embodiments, the treated protein sources can have a histamine level of from about 0 ppm to about 500 ppm, from about 10 ppm to about 300 ppm, from about 100 ppm to about 200 ppm, from about 10 ppm to about 200 ppm, or from about 10 ppm to about 150 ppm. In particular non-limiting embodiments, the treated animal protein can have a histamine level of about 0 ppm, about 10 ppm, about 15 ppm, about 50 ppm, about 100 ppm, about 125 ppm, about 150 ppm, about 200 ppm, about 250 ppm, about 275 ppm, about 300 ppm, or about 500 ppm. In certain non-limiting embodiments, the treated animal protein can have a histamine level of less than about 500 ppm, less than about 300 ppm, less than about 250 ppm, less than about 200 ppm, less than about 100 ppm, less than about 50 ppm, or less than about 25 ppm.

In certain non-limiting embodiments, the treated protein sources can have a histamine level of from about 0 mg/kg to about 200 mg/kg, from about 10 mg/kg to about 150 mg/kg, from about 100 mg/kg to about 150 mg/kg, from about 10 mg/kg to about 90 mg/kg, or from about 10 mg/kg to about 50 mg/kg. In particular non-limiting embodiments, the treated animal protein can have a histamine level of about 0 mg/kg, about 1 mg/kg, about 5 mg/kg, about 10 mg/kg, about 15 mg/kg, about 25 mg/kg, about 50 mg/kg, about 100 mg/kg, about 125 mg/kg, about 150 mg/kg, or about 200 mg/kg. In certain non-limiting embodiments, the treated animal protein can have a histamine level of less than about 200 mg/kg, less than about 150 mg/kg, less than about 100 mg/kg, less than about 90 mg/kg, less than about 50 mg/kg, less than about 25 mg/kg, less than about 15 mg/kg, less than about 10 mg/kg, less than about 5 mg/kg, less than about 2 mg/kg or less than about 1 mg/kg.

Methods for measuring the amount of histamine, other biogenic amines such as putrescine, cadaverine, spermine, spermidine, tyramine, tryptamine, 2-phenylethylamine, serotonin or agmatine, and hexanal are well known to one skilled in the art. Examples of methods for measuring these amounts are also disclosed in the experimental part herein.

### 5.3. Pet Food Compositions

In certain non-limiting embodiments, a pet food composition is provided. The pet food composition can include one or more treated animal proteins in accordance with the present disclosure and optionally one or more additional ingredients, for example, dry ingredients, liquid ingredients, or combinations thereof. A person of ordinary skill in the art will appreciate a wide variety of pet food compositions are suitable for use with the present disclosure.

### 5.4. Methods of Making Pet Food Compositions

In certain non-limiting embodiments, a method of manufacturing pet food compositions is provided. In certain non-limiting embodiments, one or more dry ingredients can be mixed with one or more wet ingredients to form an emulsion or dough. The emulsion or dough can be heated under pressure to a predetermined temperature and gradually cooled. Alternatively, an emulsion can be formed which can be comminuted and heated to a predetermined temperature, and subsequently introduced into a processing zone. In the processing zone, the emulsion can be subjected to a predetermined pressure and discharged. For producing a chunk-like product, alternatively, a slurry can be introduced to a scraped heat exchanger at a predetermined pressure and heated to produce a heat-treated product having a certain temperature. In certain non-limiting embodiments, one or more dry ingredients can be mixed with one or more wet ingredients, for example, water, to form a dough. The dough can be cooked during extrusion under conditions of elevated temperature, pressure, or combination thereof. The extruder can be provided with a die having a particular shape and the extrudate can be segmented into particles or pieces as the product is extruded.

A person of ordinary skill in the art will appreciate a wide variety of methods of manufacturing pet food compositions are suitable for use with the present disclosure.

### 5.5. Applications

Animal proteins treated in accordance with the present disclosure can be used as raw materials along with other components to form a pet food product. In certain non-limiting embodiments, the pet food composition can be used alone as a pet food product or in combination with other components to form a mixed pet food product. Any suitable pet food application can be used with the animal proteins of the present disclosure. For example, and not by way of limitation, animal proteins treated in accordance with the present disclosure can be suitable for use in dry, wet such as loaf or chunk in gravy, treats, bakery, or pillow-related pet food products.

### 6. EXAMPLES

The following examples are merely illustrative of the presently disclosed subject matter and they should not be considered as limiting the scope of the subject matter in any way.

In the examples below, the amount of histamine, tyramine, putrescine, cadaverine, serotonin, phenylethylalamine, spermidine, spermine, tryptamine, and hexanal was measured as follows.
**Analytical method for biogenic amine profile:** The principle consists in an acid extraction of the biogenic amines and the determination by high-performance liquid chromatography with fluorescence detection (HPLC-FLD) after o-Phthaldialdehyde (OPA) post-column derivatization. This protocol is adapted from AOAC International (Association of Official Analytical Chemists
- International) volume 78, n°4, 1995 and AOAC International volume 81, n°5, 1998. The expanded [k=2] uncertainty for histamine, tyramine, putrescine, cadaverine is:
- value ≥ 10 mg/kg: 30 % of the value,
- value < 10 mg/kg: 40 % of the value with a minimum at 5 mg/kg (2 mg/kg for histamine).
The expanded [k=2] uncertainty for serotonin is:
- 50 % of the value
The limit of quantification in the matrices is 2 mg/kg for histamine and 5 mg/kg for all the other biogenic amine.
**Analytical method for hexanal:** The principle consists in extracting the hexanal by using a Static Headspace extraction then analyzing by gas chromatography with flame-ionization detection (GC-FID) using an internal quantification.
The expanded [k=2] uncertainty for hexanal is 40 %.

### EXAMPLE 1: Potassium Hydroxide (KOH) and Sodium Hydroxide (NaOH) Pre-Treatment Testing of Viscera (Varied final Concentrations)

Two base compounds, potassium hydroxide (KOH) and sodium hydroxide (NaOH), were each tested at different final concentrations in the pre-treatment of animal viscera. Animal viscera was tested both in ground and unground states. Potassium hydroxide (KOH) pre-treatment was tested at a final concentration of 0 wt%, 0.5 wt%, 1 wt%, 1.2 wt%, 1.4 wt% and 1.5 wt% for unground animal viscera and at a final concentration of 0 wt%, 0.75 wt%, 1 wt%, 1.2 wt%, 1.4 wt% and 1.5 wt% for ground animal viscera. Sodium hydroxide (NaOH) pre-treatment was tested at the following final concentrations 0 wt%, 0.25 wt%, 0.5 wt% and 1 wt% for unground animal viscera and at a final concentration of 0.25 wt%, 0.5 wt%, 1 wt% and 1.5 wt% for ground animal viscera. The level of histamine (ppm) and pH were measured for all samples. Histamine is a byproduct from amino acid fermentation (histidine) can be used as a tracer of biogenic amines. A lower the level of histamine can indicate a fresher raw material.

The results of the potassium hydroxide (KOH) pre-treatment of animal viscera are provided in Table 1A (unground) and Table 1B (ground), which correspond to FIG. 1A (unground) and FIG. 1B (ground), respectively. The results for sodium hydroxide (NaOH) pre-treatment of animal viscera are provided in Table 2A (unground) and Table 2B (ground), which correspond to FIG. 2A (unground) and FIG. 2B (ground), respectively.

**Table 1A. KOH Treatment (Unground)**

| Level of KOH (wt%) | Histamine (ppm) | pH |
|---|---|---|
| 0 | 136 | -- |
| 0.5 | 194 | 6.21 |
| 0.75 | 191 | -- |
| 1 | 147 | 6.04 |
| 1.2 | 269 | 6.45 |
| 1.4 | 143 | 6.63 |
| 1.5 | 194 | 7.22 |

**Table 1B. KOH Treatment (Ground)**

| Level of KOH (wt%) | Histamine (ppm) | pH |
|---|---|---|
| 0 | 268 | -- |
| 0.75 | 300 | 6.32 |
| 1 | 293 | 6.44 |
| 1.2 | 194 | 6.45 |
| 1.4 | 161 | 6.95 |
| 1.5 | 203 | -- |

**Table 2A. NaOH Treatment (Unground)**

| Level of NaOH (wt%) | Histamine (ppm) | pH |
|---|---|---|
| 0 | 143 | 6.21 |
| 0 | 139 | 6.04 |
| 0.25 | 11 | 6.45 |
| 0.5 | 16.5 | 6.63 |
| 1 | 12.5 | 7.22 |

**Table 2B. NaOH Treatment (Ground)**

| Level of NaOH (wt%) | Histamine (ppm) | pH |
|---|---|---|
| 0.25 | 186 | 6.32 |
| 0.5 | 160 | 6.44 |
| 1 | 45.5 | 6.45 |
| 1.5 | 6.5 | 6.95 |

As shown in Tables 1A-1B and 2A-2B and FIGS. 1A-1B and 2A-2B, pre-treatment of animal viscera (ground or unground) with sodium hydroxide (NaOH) was more efficient than pre-treatment with potassium hydroxide (KOH). In both unground and ground animal viscera, pre-treatment with sodium hydroxide (NaOH) increased the pH level of the material and lowered levels of histamine.

### EXAMPLE 2: Sodium Hydroxide (NaOH) Pre-Treatment Testing (0.25 wt% and 0.5 wt% NaOH) of Poultry Meal Including Viscera

Sodium hydroxide (NaOH) was tested in the pre-treatment of animal protein, i.e., poultry meal, at final concentrations of 0 wt%, 0.25 wt%, and 0.5 wt% over a period of time. The level of histamine (mg/kg) was measured at 1 hour, 5 hours, 12 hours, 20 hours, 24 hours, and 30 hours for each final concentration of sodium hydroxide (NaOH) pre-treatment. Viscera from standard chickens was removed from the slaughterhouse directly after conveying and screening. A homogeneous mixture of fresh viscera was separated into three containers with identical weights (i.e., "Control"; "NaOH added at 0.25 wt%"; and "NaOH added at 0.5 wt%") promptly after slaughtering. Approximately 1 hour after collection, soda at 80% by mass was added to each of the three containers. The three containers were then hand blended for 30 seconds. The containers were placed in a controlled room maintained at 20 °C for the duration of the testing. Samples were taken at the same time point (T0-T5) from each of the three containers as provided in Table 3 and stored immediately in a freezer. A total of 16 samples were tested. The Control was tested at T0 and all three containers (Control, 0.25 wt% NaOH, and 0.5 wt% NaOH) were tested at T1-T5. Agitation was performed on each container before each intermediate sampling step. After 30 hours of storage, all samples were dehydrated in the oven at 115°C for 24 hours prior to testing for hexanal (oxidation), biogenic amines, and sodium.

**Table 3. Sampling Procedure**

| | 0 wt% NaOH (Control) | 0.25 wt% NaOH | 0.5 wt% NaOH |
|---|---|---|---|
| T0 | 1hr after slaughter | | |
| T1 | 5 hrs after slaughter | | |
| T2 | 12 hrs after slaughter | | |
| T3 | 20 hrs after slaughter | | |
| T4 | 24 hrs after slaughter | | |
| T5 | 30 hrs after slaughter | | |

The results of hexanal, sodium, and biogenic amines testing are provided in Table 4. The results of histamine levels (mg/kg) are provided in FIG. 3. The results of cadaverine levels (mg/kg) are provided in FIG. 4.

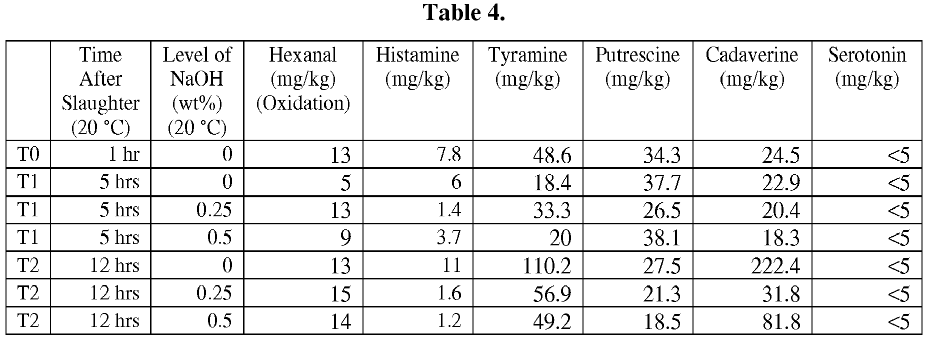

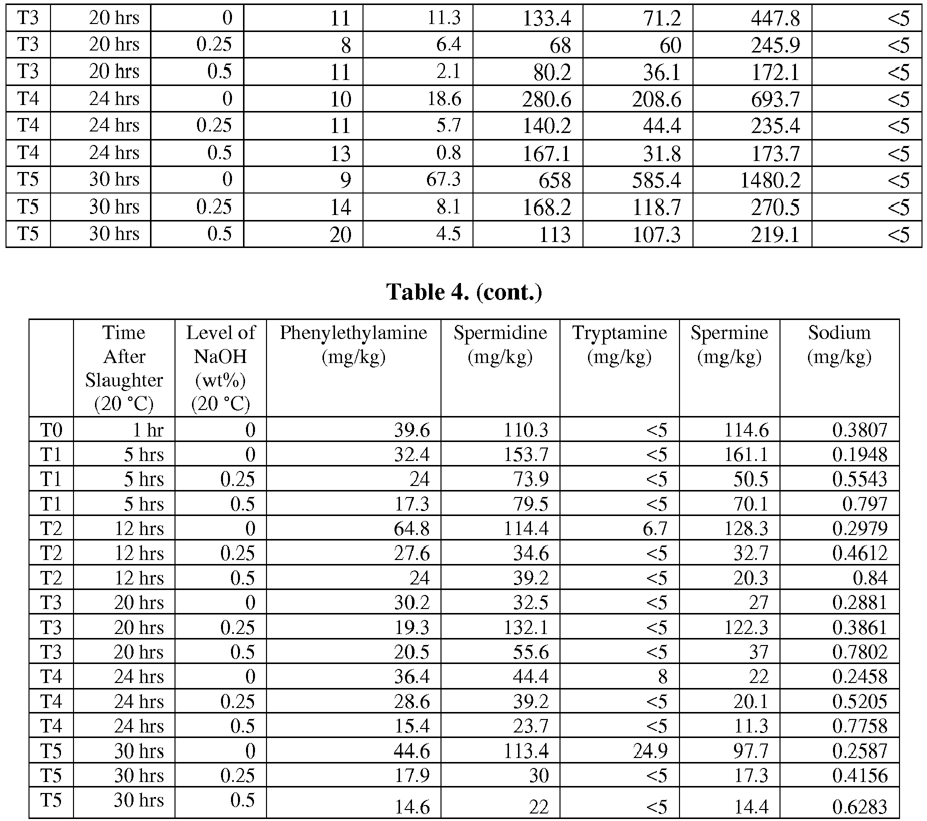

As shown in Table 4 and FIG. 3 providing the results of histamine levels (mg/kg), sodium hydroxide (NaOH) can be used to preserve animal protein. Sodium hydroxide (NaOH) at a final concentration of 0.5 wt% was more efficient in preservation of the animal protein and impacted the pH of the animal protein more as compared to sodium hydroxide (NaOH) at a final concentration of 0.25 wt%. The higher final concentration of sodium hydroxide (NaOH) at 0.5 wt% increased the pH of the material to a more basic level as compared to sodium hydroxide (NaOH) at a final concentration of 0.25 wt%. As shown in Table 4 and FIG. 3, the histamine level of the material decreased in correlation with an increasing final concentration of sodium hydroxide (NaOH), i.e., from 0 wt%, 0.25 wt% to 0.5 wt%.

In addition to the various embodiments depicted and claimed, the disclosed subject matter is also directed to other embodiments having other combinations of the features disclosed and claimed herein. As such, the particular features presented herein can be combined with each other in other manners within the scope of the disclosed subject matter such that the disclosed subject matter includes any suitable combination of the features disclosed herein. The foregoing description of specific embodiments of the disclosed subject matter has been presented for purposes of illustration and description. It is not intended to be exhaustive or to limit the disclosed subject matter to those embodiments disclosed.

It will be apparent to those skilled in the art that various modifications and variations can be made in the systems and methods of the disclosed subject matter without departing from the spirit or scope of the disclosed subject matter. Thus, it is intended that the disclosed subject matter include modifications and variations that are within the scope of the appended claims and their equivalents.

## Claims

1. A method of treating one or more protein sources, the method comprising adding one or more base components to the protein source,
wherein the treated protein sources have a histamine level of less than about 300 ppm.

2. The method of claim 1, wherein the base component comprises sodium hydroxide (NaOH).

3. The method of claim 2, wherein the sodium hydroxide (NaOH) is present at a final concentration of from about 0.25 wt% to about 0.5 wt%.

4. The method of claim 1, wherein the one or more protein sources comprises animal protein, animal-derived protein, or combinations thereof.

5. The method of claim 4, wherein the one or more protein sources comprises viscera.

6. The method of claim 1, wherein the treated protein sources have a histamine level of from about 10 ppm to about 200 ppm.

7. The method of claim 1, wherein the treated protein sources have a pH of from about 5 to about 8.

8. The method of claim 7, wherein the treated protein sources have a pH of from about 6 to about 7.
